# EUROPÄISCHE PATENTSCHRIFT

(11) **EP 1 200 287 B1**
(45) Veröffentlichungstag und Bekanntmachung des Hinweises auf die Patenterteilung: **26.02.2003**
(21) Anmeldenummer: 00943947.2
(22) Anmeldetag: 29.06.2000
(51) Int. Cl.: B60R 1/074

(54) **EINKLAPPBARER RÜCKSPIEGEL FÜR KRAFTFAHRZEUGE**
RETRACTABLE REAR-VIEW MIRROR FOR MOTOR VEHICLES
RETROVISEUR ESCAMOTABLE DE VEHICULES AUTOMOBILES

(30) Priorität: 07.07.1999 DE 19932262
(43) Veröffentlichungstag der Anmeldung: 02.05.2002
(73) Patentinhaber: Magna Auteca AG, 8160 Weiz (AT)
(72) Erfinder: SCHILLEGGER, Peter, A-8302 Nestelbach (AT); SCHADLER, Bernhard, A-8261 Sinabelkirchen (AT)
(74) Vertreter: Pfenning, Meinig & Partner GbR
(86) Internationale Anmeldenummer: EP0006086
(87) Internationale Veröffentlichungsnummer: WO01003975

(56) Entgegenhaltungen:
- DE-A- 19 912 761
- PATENT ABSTRACTS OF JAPAN vol. 012, no. 262 (M-721), 22. Juli 1988 (1988-07-22) & JP 63 046939 A (KOITO MFG CO LTD), 27. Februar 1988 (1988-02-27)

## Beschreibung

Die Erfindung handelt von einem einklappbaren Rückspiegel für Kraftfahrzeuge, bestehend aus einer am Kraftfahrzeug festsitzenden Basis, einer gegenüber dieser um eine Achse schwenkbaren Spiegeleinheit und einer aus einem Motor und einem Getriebe zusammengesetzten Schwenkantriebseinheit. Die Erfindung betrifft insbesondere aussenliegende Rückspiegel, die aus dem Inneren des Fahrzeuges gesteuert elektromotorisch nicht nur verstellbar, sondern auch einwärts schwenkbar sind, etwa vor dem Durchfahren einer Waschstraße. Die Schwenkachse ist im Wesentlichen vertikal, sodaß die Spiegelfläche bei eingeklapptem Spiegel etwa paralell zur Seitenwand des Fahrzeuges ausgerichtet ist.

In der Betriebsstellung muß die Spiegeleinheit genau positioniert bleiben, auch gegen den Luftwiderstand bei schneller Fahrt. Deshalb wird sie von einer, meist federbelasteten, formschlüssigen Positionierungsvorrichtung gehalten und der Antrieb muß bei von aussen auf die Spiegeleinheit wirkenden Kräften selbsthemmend sein. Das bedeutet Reibungsverluste. Beim Einschwenken der gesamten Spiegeleinheit müssen diese Kräfte überwunden werden, was ein erhebliches Antriebsdrehmoment erfordert. Das bedingt einen starken und daher großen Motor und/oder eine sehr hohe Übersetzung des Getriebes, die dann auch die mit hohen Reibungsverlusten erkaufte Selbsthemmung erzeugt. Die Reibungsverluste erhöhen die benötigte Motorleistung weiter und verringern die Lebensdauer.

Wie auch immer die Auslegung getroffen ist, der für die gesamte Schwenkantriebseinheit erforderliche Bauraum ist erheblich. Egal, ob die Schwenkantriebseinheit in der Basis oder in der Spiegeleinheit untergebracht ist, ist der Bauraum sehr knapp; die Antriebseinheit soll also möglichst klein bauen.

Der nächstliegende Stand der Technik wird in "Patent Abstracts of Japan" Vol. 012, No. 262 (M-721), vom 22. Juli 1988 (1988-07-22) zur JP 6 304 6939 A offenbart.

Diese Druckschrift zeigt einen Einklappbaren Rückspiegel für ein Kraftfahrzeug, bestehend aus einer am Kraftfahrzeug festsitzenden Basis, einer gegenüber dieser um eine Achse schwenkbaren Spiegeleinheit und einer aus einem Motor und einem Getriebe zusammengesetzten Schwenkantriebseinheit, wobei
a) das Getriebe der Schwenkantriebseinheit ein Spannungswellengetriebe ist, dessen Zentralachse parallel versetzt zur Schwenkachse der Spiegeleinheit ist,
b) das Spannungswellengetriebe in seinem Getriebegehäuse einen Antriebsexzenter , einen elastischen Zahnring und ein mit diesem zusammenwirkendes koaxiales Abtriebsglied mit unterschiedlicher Zähnezahl enthält,
c) der Antriebsexzenter mit dem Motor antriebsverbunden ist.
d) das Abtriebsglied mit der Spiegeleinheit antriebsverbunden ist.

Die DE 199 127 61 A1 zeigt einen Stellantrieb, bestehend aus zumindest einem Elektromotor und einem Untersetzungsgetriebe. Das Untersetzungsgetriebe besteht aus einem ersten Hohlrad, einem Exzenter, einem außen flexiblen Zahnrad mit nebeneinander angeordneten Verzahnungen und einem zweiten Hohlrad mit einem einstückig damit verbundenen Ritzel. Das erste Hohlrad ist an zumindest zwei Stellen mit der Verzahnung des flexiblen Zahnrades in Eingriff, das zweite Hohlrad ist an mindestens zwei Stellen mit der zweiten Verzahnung des flexiblen Zahnrades in Eingriff. Der maximale Durchmesser des Exzenters ist kleiner als der maximale Durchmesser des Elektromotors. Der Exzenter ist direkt mit der Motorwelle über eine verdrehgesicherte Aufnahme verbunden.

Aus der EP 644 084 B ist ein Rückspiegel bekannt, dessen Schwenkantriebseinheit aus einem Elektromotor und einem Übersetzungsgetriebe besteht, die beide in der Spiegeleinheit unter untergebracht sind. Das Übersetzungsgetriebe besitzt zwei Schnecken und zwei Stirnradstufen, um die erforderliche Übersetzung und Selbsthemmung zu erreichen. Es braucht daher relativ viel Bauraum, vor allem abseits der Schwenkachse und unter dem Elektromotor, was sich auf die Form der Spiegeleinheit ungünstig auswirkt und mit dem Verstellantrieb des Spiegels kollidiert. Weiters ist nachteilig, daß die Schneckenstufen hohe Axialkräfte erzeugen, die in das Gehäuse eingeleitet werden müssen, und unter großen Reibungsverlusten und trotz metallischer Bauteile unter hohem Verschleiß leiden.

Es ist daher Ziel der Erfindung, die Schwenkantriebseinheit so auszubilden und anzuordnen, daß bei insgesamt minimalem Raumbedarf und günstiger Einbauform minimale Reibungsverluste und hohe Betriebssicherheit bei einfacher Fertigung erreicht werden.

Erfindungsgemäß wird das durch die Merkmale des ersten Anspruches erreicht. Bei einem einklappbaren Rückspiegel für ein Kraftfahrzeug, bestehend aus einer am Kraftfahrzeug festsitzenden Basis, einer gegenüber dieser um eine Achse schwenkbaren Spiegeleinheit und einer aus einem Motor und einem Getriebe zusammengesetzten Schwenkantriebseinheit sind zusätzlich folgende Merkmale gegeben :
(a) Mit einem Spannungswellengetriebe sind sehr große Übersetzungen auf kleinstem Bauraum und bei nur kleinen Reibungsverlusten zu erreichen, trotzdem ist es selbsthemmend. Gerade die normalerweise unbeachtete Eigenschaft eines Spannungswellengetriebes, trotz geringer Reibunggsverluste selbsthemmend zu sein, ist hier sehr wertvoll. Ausserdem erzeugt es keine Axialkräfte. Dadurch, daß die Zentralachse des Spannungswellengetriebes mit der Schwenkachse der Spiegeleinheit koaxial ist, kann die geringe axiale Breite eines solchen Getriebes voll genutzt werden und dessen innerer Bereich wird für die Aufnahme der Schwenkachse genutzt.
(b) Die Bauweise des Spannungswellengetriebes mit einem Antriebsexzenter, einem elastischen Zahnring und zwei mit diesem zusammenwirkenden koaxialen Abtriebsgliedern mit verschiedener Zähnezahl ist besonders platzsparend und reibungsarm. Letzteres erlaubt auch die Verwendung eines schwächeren und daher kleineren Motors.
(c) Das Spannungswellengetriebe ist dann besonders klein und reibungsarm, wenn der Antriebsexzenter eine mit einem Ritzel des Motors antriebsverbundene Aussenverzahnung hat. Der Antrieb erfolgt dann gewissermaßen von der Seite, was die Bauhöhe weiter vermindert und eine gute Ableitung der Zahnkräfte ermöglicht. Ausserdem kann so der Motor seitlich der Schwenkachse und mit seinem Abtriebsritzel sehr tief angeordnet sein, was auch wieder den Einbaumaßen zugute kommt.
(d) Dadurch, daß von den beiden einander und mit der Schwenkachse koaxialen Abtriebsgliedern eines mit der Basis und eines mit der Spiegeleinheit antriebsverbunden ist, sind die beiden Abtriebsglieder den mit ihnen verbundenen Teilen - Basis und Spiegeleinheit - direkt koaxial zugeordnet, ohne daß es weiterer Übertragungsglieder bedürfte. Damit ist auch die Gesamtform der Antriebseinheit der Einbausituation ideal angepasst.

In einer bevorzugten Ausführungsform sind der Antriebsexzenter des Spannungswellengetriebes innerhalb und die beiden Abtriebsglieder ausserhalb des elastischen Zahnringes angeordnet, ist eines der beiden Abtriebsglieder Teil des Getriebegehäuses und das andere der beiden Abtriebsglieder mit dem relativ zum Getriebegehäuse beweglichen Teil antriebsverbunden (Anspruch 2). Der bewegliche Teil kann sowohl die Basis als auch die Spiegeleinheit sein. In beiden Fällen ist durch den Abtrieb an der Aussenseite wieder eine Kraftübertragung ohne Zwischenglieder möglich. Der Antrieb von innen hat eine besonders gute Anlage des elastischen Zahnringes zur Folge, die die Leistungsdichte erhöht.

Eine besonders leichte und raumsparende Konstruktion wird erreicht, wenn der Antriebsexzenter mindestens zwei in gleichem Winkelabstand voneinander angeordnete Gleitschuhe besitzt, die an der Innenseite des elastischen Zahnringes gleiten (Anspruch 3). Dazwischen besitzt der Antriebsexzenter Stützstege (Anspruch 4), die ein Durchhängen des elastischen Zahnringes zwischen den Gleitschuhen - das zu schlechtem Zahneingriff führen kann - unterbinden.

Mit Vorteil weist der Antriebsexzenter einen zentralen Durchbruch für den Durchtritt des Drehzapfens auf und läuft im Wesentlichen in der Ebene seiner Aussenverzahnung in Lagern, von denen eines in dem einen Abtriebsglied und eines in dem anderen Abtriebsglied beziehungsweise in damit fest verbundenen Teilen sitzen (Anspruch 5). Das Spannungswellengetriebe ist somit um die Achse, um die die Spiegeleinheit verschwenkt wird, herum gebaut. Der Antriebsexzenter ist präzise gelagert und zentriert, was zu sauberem Eingriff und geringem Verschleiß der Getriebeteile erheblich beitragt, sodaß sie sogar aus Kunststoff gefertigt sein können.

In Weiterbildung der Erfindung kann die Antriebsverbindung zwischen dem Ritzel des Motors und der Aussenverzahnung des Antriebsexzenters über mindestens eine Stirnradstufe hergestellt sein (Anspruch 6). Abgesehen von der dadurch möglichen größeren Übersetzung ist dadurch eine noch freiere Gestaltung der äusseren Form der Schwenkantriebseinheit gegeben, weil der Motor weiter von der Schwenkachse weg angeordnet sein kann.

In einer bevorzugten Ausführungsform ist die Schwenkantriebseinheit in der Spiegeleinheit untergebracht und das nicht mit dem Gehäuse verbundene Abtriebsglied mit einer mit der Basis drehfest verbundenen hohlen Achse antriebsverbunden (Anspruch 7). Die Anbringung der Schwenkantriebseinheit im bewegten Teil, in dem die Platzverhältnisse etwas günstiger als in der Basis sind, verursacht keinen Mehraufwand, da durch die hohle Achse auch die Leitungen für die Verstellung des Spiegels geführt sind.

Die geringe axiale Höhe des Getriebes und der abseits angeordnete Motor lassen genug Raum für eine zwischen dem Abtriebsglied und der hohlen Achse angeordnete federbelastete Drehmomentbegrenzungskupplung, wobei diese auf der einen und die Feder auf der anderen Seite des Gehäuses angeordnet ist (Anspruch 8). Das ergibt eine ideale Disposition bei minimalem Raumbedarf, es bleibt sogar noch Raum für ein Axiallager zwischen den beiden Abtriebsaliedern (Anspruch 9), was Reibungsverluste und Verschleiß weiter verringert.

Im Folgenden wird die Erfindung anhand von Abbildungen beschrieben und erläutert. Es stellen dar:
- Fig.1:: Einen erfindungsgemäßen Rückspiegel, teilweise aufgeschnitten,
- Fig.2:: Die Antriebseinheit der Fig.1 vergrößert und im Längsschnitt,
- Fig.3:: Schnitt III-III in Fig.2.

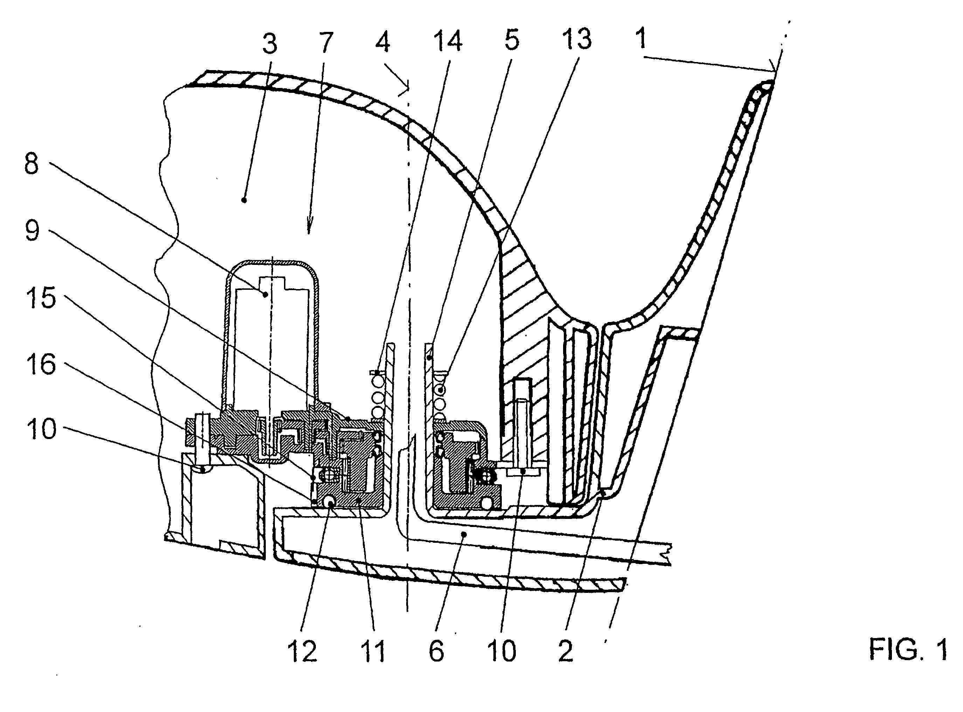

In Fig. 1 ist der erfindungsgemäße Rückspiegel nur teilweise dargestellt. An der nur angedeuteten Seitenfläche 1 der A-Säule eines Kraftfahrzeuges ist eine Basis 2 fest angebracht. Sie tragt eine Spiegeleinheit 3, die gegenüber der Basis 2 um eine Drehachse 4 schwenkbar ist. Dazu ist ein hohler Drehzapfen 5 mit der Basis 2 fest verbunden oder Teil dieser. Er ist für die Durchführung elektrischer Leitungen 6 hohl ausgebildet. In der Spiegeleinheit 3 ist eine summarisch mit 7 bezeichnete Schwenkantriebseinheit befestigt. Sie besteht im Wesentlichen aus einem Elektromotor 8 und einem Getriebe 9, welches mittels Schrauben 10 in der Spiegeleinheit 3 befestigt ist.

Die Schwenkantriebseinheit 7 besitzt ein Ausgangselement 11, welches den hohlen Drehzapfen 5 lose umgibt und über eine drehmomentbegrenzende Kupplung 12 mit der Basis 2 begrenzt kraftschlüssig verbunden ist. Die drehmomentbegrenzende Kupplung ist von einer der bekannten Bauarten, hier mit Kugeln. Der für die Drehmomentübertragung über diese Kugeln erforderliche Anpressdruck wird von einer Druckfeder 13 auf das Getriebe 9 ausgeübt. Die Druckfeder 13 stützt sich etwa an einem Sprengring 14 ab. Die relative Verdrehung zwischen dem Ausgangselement 11 und dem Getriebe 9 wird durch einen Finger 15 begrenzt, der mit einem Anschlag 16 am Ausgangselement 11 zusammenwirkt.

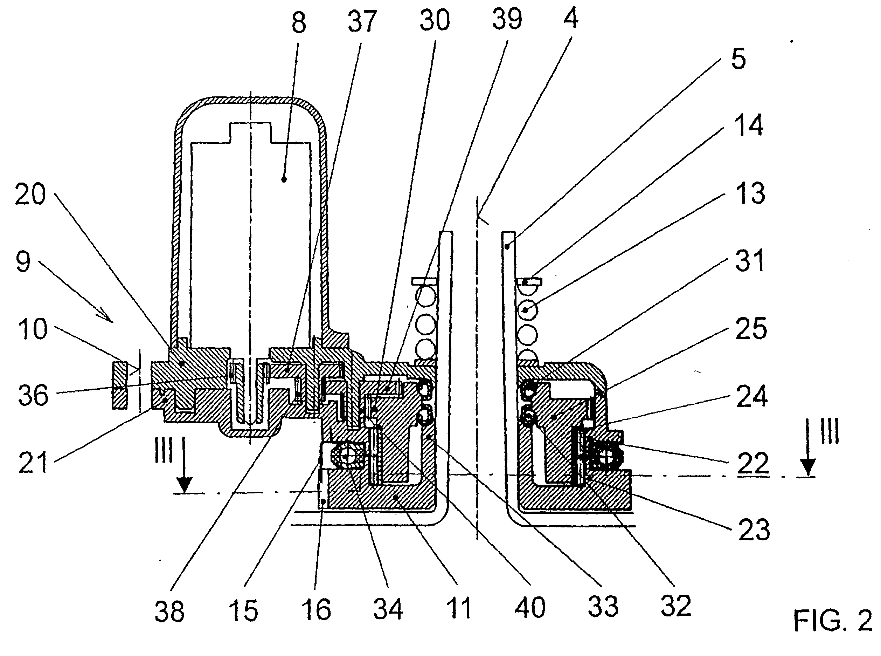

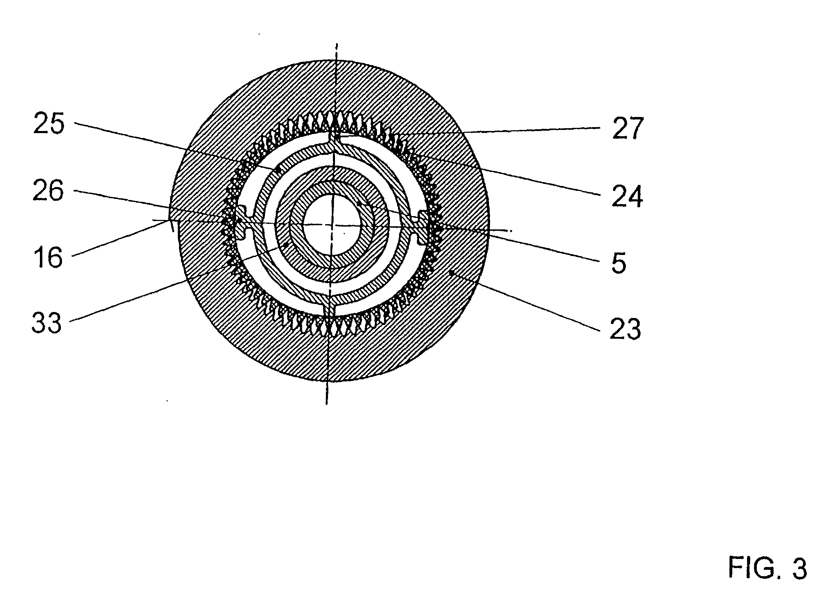

Fig. 2 und 3 zeigen die Schwenkantriebseinheit 7 im Detail. Das Gehäuse besteht aus einem Gehäuseoberteil 20 und einem Gehäuseunterteil 21, die miteinander dicht verbunden sind, beispielsweise gleich durch die Schrauben 10. Das Gehäuse enthält ein mit der Drehachse 4 konzentrisches Spannungswellengetriebe, welches aus den folgenden Teilen besteht: einem ersten Abtriebsglied 22 mit der Zähnezahl Z1, das hier integraler Bestandteil des Gehäuseunterteiles 21 ist; einem zweiten Abtriebsglied 23 mit der Zähnezahl Z2, das hier einstückig mit dem Ausgangselement 11 ist; einem elastischen Zahnring 24 mit einer Aussenverzahnung der Zähnezahl Z3 und einer glatten Innenfläche; und aus einem Antriebsexzenter 25 mit zwei einander gegenüberliegenden Gleitschuhen 26 und dazwischen zwei einander gegenüberliegenden Stützstegen 27.

Die Zähnezahlen Z1, Z2 und Z3 sind voneinander verschieden und entsprechend dem gewünschten Übersetzungsverhältnis gewählt. Die beiden Abtriebsglieder 22,23 sind sehr schmal und koachsial nebeneinander angeordnet, der elastische Zahnring 24 wirkt mit beiden Abtriebsgliedern 22,23 in der Weise zusammen, dass er von den Gleitschuhen 26 in die Innenverzahnungen der beiden Abtriebsglieder 22,23 gedrückt wird. Die Stützstege unterstützen den nicht eingreifenden Teil des elastischen Zahnringes 24, sodass dieser keine unkontrollierten Bewegungen ausführen kann, unter der seine Verzahnung leiden würde.

Der Antriebsexzenter 25 besitzt ausserhalb des mit dem elastischen Zahnring 24 zusammenwirkenden Teiles eine Aussenverzahnung 30 und ist ungefähr in der achsnormalen Ebene dieses Antriebszahnkranzes in Lagern 31,32 geführt. Das Lager 31 ist im Gehäuseoberteil 20 angeordnet, das untere Lager 32 im Ausgangselement 11, wozu dieses einen aufwärts ragenden Kragen 33 besitzt. Der schnellaufende Antriebsexzenter 25 ist somit einerseits gegenüber dem Gehäuse 10 und andererseits gegenüber dem sich sehr langsam drehenden Ausgangselement 11 gelagert, was bemerkenswert ist.

Der Elektromotor 8 treibt in der abgebildeten Ausführungsform mittels seines Motorritzels 36 über zwei Stirnradstufen den Antriebsexzenter 25. Diese Stirnradstufen werden von einem ersten Großrad 37 mit einstückig einem ersten Ritzel 38 und über ein zweites Großrad 39 mit einstückig einem zweiten Ritzel 40 angetrieben. Die beiden Großrad-Ritzeleinheiten (37,38 und 39,40) können Gleichteile sein. Das zweite Ritzel 40 treibt hier schließlich den Antriebsexzenter 25 über seine Aussenverzahnung 30. Zwischen dem ersten und dem zweiten Abtriebsglied 22,23 ist ein Axiallager 34 vorgesehen, das die von der Druckfeder 13 ausgeübte Kraft auf das Ausgangselement 11 übertragt.

Aus den beschriebenen Figuren ist zu erkennen, wie klein die Schwenkantriebseinheit durch die Verwendung eines Spannungswellengetriebes und durch dessen besondere Disposition ist. Im Rahmen der Erfindung sind viele Abwandlungen möglich, sowohl hinsichtlich der Anordnung des Getriebes in der Basis 2 oder im Spiegelelement 3, als auch in der Ausgestaltung des Spannungswellengetriebes und in der Zahl und Anordnung der diesen vorangehenden Stimradstufen.

## Patentansprüche

1. Einklappbarer Rückspiegel für ein Kraftfahrzeug, bestehend aus einer am Kraftfahrzeug festsitzenden Basis (2), einer gegenüber dieser um eine Achse schwenkbaren Spiegeleinheit (3) und einer aus einem Motor (8) und einem Getriebe (9) zusammengesetzten Schwenkantriebseinheit (7), wobei
a) das Getriebe (9) der Schwenkantriebseinheit (7) ein Spannungswellengetriebe ist, dessen Zentralachse koaxial mit der Schwenkachse (4) der Spiegeleinheit (3) ist,
b) das Spannungswellengetriebe in seinem Getriebegehäuse (20,21) einen Antriebsexzenter (25), einen elastischen Zahnring (24) und zwei mit diesem zusammenwirkende koaxiale Abtriebsglieder (22,23) mit verschiedener Zähnezahl enthält,
c) der Antriebsexzenter (25) eine mit einem Ritzel (36) des Motors (8) antriebsverbundene Aussenverzahnung (30) hat,
d) von den beiden Abtriebsgliedern (22,23) eines (23) mit der Basis (2) und eines mit der Spiegeleinheit (3) antriebsverbunden ist.

2. Einklappbarer Rückspiegel nach Anspruch 1, **dadurch gekennzeichnet, daß** der Antriebsexzenter (25) innerhalb und die beiden Abtriebsglieder (22,23) ausserhalb des elastischen Zahnringes (24) angeordnet sind, eines der beiden Abtriebsglieder (22) Teil des Getriebegehäuses (20,21) und das andere der beiden Abtriebsglieder (23) mit dem relativ zum Getriebegehäuse (20,21) beweglichen Teil (2;3) antriebsverbunden ist.

3. Einklappbarer Rückspiegel nach Anspruch 2, **dadurch gekennzeichnet, daß** der Antriebsexzenter (25) mindestens zwei in gleichem Winkelabstand voneinander angeordnete Gleitschuhe (26) besitzt, die an der Innenseite des elastischen Zahnringes (24) gleiten.

4. Einklappbarer Rückspiegel nach Anspruch 3, **dadurch gekennzeichnet, daß** der Antriebsexzenter (25) zwischen den Gleitschuhen (26) Stützstege (27) besitzt.

5. Einklappbarer Rückspiegel nach Anspruch 2, **dadurch gekennzeichnet, daß** der Antriebsexzenter (25) einen zentralen Durchbruch für den Durchtritt des Drehzapfens (5) aufweist und im Wesentlichen in der Ebene seiner Aussenverzahnung (30) in Lagern (31,32) läuft, von denen eines (31) in dem einen Abtriebsglied (22) und eines (32) in einem mit dem anderen Abtriebsglied (23) beziehungsweise in damit fest verbundenen Teilen sitzen.

6. Einklappbarer Rückspiegel nach Anspruch 1, **dadurch gekennzeichnet, daß** die Antriebsverbindung zwischen dem Ritzel (36) des Motors (8) und der Aussenverzahnung (30) des Antriebsexzenters (25) über mindestens eine Stirnradstufe (37,38; 39,40) hergestellt ist.

7. Einklappbarer Rückspiegel nach Anspruch 2, **dadurch gekennzeichnet, daß** die Schwenkantriebseinheit (7) in der Spiegeleinheit (3) untergebracht und das nicht mit dem Gehäuse (21,22) verbundene Abtriebsglied mit einem mit der Basis drehfest verbundenen hohlen Drehzapfen (5) antriebsverbunden ist.

8. Einklappbarer Rückspiegel nach Anspruch 7, **dadurch gekennzeichnet, daß** die Antriebsverbindung zwischen dem Abtriebsglied (11) und der Basis (2) beziehungsweise dem hohlen Drehzapfen (5) über eine an der einen Seite des Getriebegehäuses (21,22) angeordnete federbelastete Drehmomentbegrenzungskupplung (12) hergestellt ist, wobei die Feder (13) auf der anderen Seite des Gehäuses (21,22) angeordnet ist.

9. Einklappbarer Rückspiegel nach Anspruch 8, **dadurch gekennzeichnet, daß** zwischen den beiden Abtriebsgliedern (22,23) ein Axiallager (34) vorgesehen ist.

## Claims

1. Folding rear-view mirror for a motor vehicle consisting of a base (2) tightly seated on the motor vehicle, a mirror unit (3) capable of swivelling relative to the latter about an axis and a pivot drive unit (7) composed of a motor (8) and a gear (9) , whereby
a) the gear (9) of the pivot drive unit (7) is a harmonic drive gear whose central axis is coaxial with the pivot axis (4) of the mirror unit (3),
b) the harmonic drive gear contains in its gear housing (20,21) a driving eccentric (25), an elastic annular gear (24) and working together with the latter two coaxial power take-off members (22,23) with different numbers of teeth,
c) the driving eccentric (25) has an outer toothed structure (30) having a drive connection to a pinion (36) of the motor (8),
d) of the two power take-off members (22,23) one (23) has a drive connection to the base (2) and one has a drive connection to the mirror unit (3).

2. Folding rear-view mirror according to claim 1, **characterized in that** the driving eccentric (25) is arranged inside and the two power take-off members (22,23) outside the elastic annular gear (24), one of the two power take-off members (22) is part of the gear housing (20,21) and the second of the two power take-off members (23) has a drive connection to the part (2;3) movable relative to the gear housing (20,21).

3. Folding rear-view mirror according to caim 2, **characterized in that** the driving eccentric (25) possesses at least two sliding blocks (26) which are arranged at the same angular spacing from one another and slide on the inside of the elastic annular gear (24).

4. Folding rear-view mirror according to claim 3, **characterized in that** the driving eccentric (25) possesses support webs (27) between the sliding blocks (26).

5. Folding rear-view mirror according to claim 2, **characterized in that** the driving eccentric (25) has a central opening for the passage of the pivot pin (5) and substantially in the plane of its outer toothed structure (30) runs in bearings (31,32) of which one (31) is seated in one power take-off member (22) and one (32) in a part connected to the other power take-off member (23) or in parts fixedly connected thereto.

6. Folding rear-view mirror according to claim 1, **characterized in that** the drive connection between the pinion (36) of the motor (8) and the outer toothed structure (30) of the driving eccentric (25) is established via at least one spur wheel stage (37,38;39,40).

7. Folding rear-view mirror according to claim 2, **characterized in that** the pivot drive unit (7) is accomodated in the mirror unit (3) and the power take-off member not connected to the housing (21,22) has a drive connection to a hollow pivot pin (5) connected in non-slipping manner to the base.

8. Folding rear-view mirror according to claim 7, **characterized in that** the drive connection between the power take-off member (11) and the base (2) or the hollow pivot pin (5) is established via a spring-loaded torque limiting coupling (12) arranged on one side of the gear housing (21,22), the spring (13) being arranged on the other side of the housing (21,22).

9. Folding rear-view mirror according to claim 8, **characterized in that** a thrust bearing (34) is provided between the two power take-off members (22,23).

## Revendications

1. Rétroviseur escamotable pour véhicule automobile, composé d'une base (2) reposant de façon fixe au niveau du véhicule, d'une unité de rétroviseur (3) pouvant pivoter par rapport à cette base autour d'un axe, et d'une unité d'entraînement par pivotement (7) comportant un moteur (8) et une transmissibn(9), dans lequel
(a) la transmission (9) de l'unité d'entraînement par pivotement (7) est une transmission à démultiplicateur harmonique dont l'axe central est coaxial à l'axe de pivotement (4) de l'unité de rétroviseur (3),
(b) la transmission à démultiplicateur harmonique contient dans son carter de transmission (20, 21) un excentrique d'entraînement (25), un anneau denté élastique (24) et deux organes menés coaxiaux (22, 23) collaborant avec cet anneau et comportant un nombre de dents différent,
(c) l'excentrique d'entraînement (25) a une denture externe (30) reliée par entraînement à un pignon (36) du moteur (8),
(d) parmi les deux organes menés (22, 23), l'un (23) est relié par entraînement à la base (2) et l'autre à l'unité de rétroviseur (3).

2. Rétroviseur escamotable selon la revendication 1, **caractérisé en ce que** l'excentrique d'entraînement (25) est disposé à l'intérieur et les deux organes menés (22, 23) à l'extérieur de l'anneau denté élastique (24), un des deux organes menés (22) étant relié par entraînement à une partie du carter de transmission (20,21) et l'autre des deux organes menés (23) à la partie (2 ; 3) mobile par rapport au carter de transmission (20, 21).

3. Rétroviseur escamotable selon la revendication 2, **caractérisé en ce que** l'excentrique d'entraînement (25) possède au moins deux patins de guidage (26) disposés l'un par rapport à l'autre en formant un écartement angulaire identique, lesquels glissent au niveau du côté interne de l'anneau denté élastique (24).

4. Rétroviseur escamotable selon la revendication 3, **caractérisé en ce que** l'excentrique d'entraînement (25) possède des entretoises d'appui (27) entre les patins de guidage (26).

5. Rétroviseur escamotable selon la revendication 2, **caractérisé en ce que** l'excentrique d'entraînement (25) présente un passage central destiné au passage du tourillon (5) et s'étend essentiellement dans le plan de sa denture externe (30) dans des paliers (31, 32), parmi lesquels un (31) loge dans l'un (22) des organes menés et un (32) dans une partie reliée à l'autre organe mené (23) ou selon les cas dans des parties qui sont reliées de façon fixe à cet autre organe mené.

6. Rétroviseur escamotable selon la revendication 1, **caractérisé en ce que** la relation d'entraînement entre le pignon (36) du moteur (8) et la denture externe (30) de l'excentrique d'entraînement (25) est réalisée par au moins un étage de roue droite (37, 38 ; 39,40).

7. Rétroviseur escamotable selon la revendication 2, **caractérisé en ce que** l'unité d'entraînement par pivotement (7) est insérée dans l'unité de rétroviseur (3) et l'organe mené non relié au carter (21, 22) est relié par entraînement à un tourillon creux (5) relié de façon fixe à la base.

8. Rétroviseur escamotable selon la revendication 7, **caractérisé en ce que** la relation d'entraînement entre l'organe mené (11) et la base (2) ou selon le cas le tourillon creux (5) est réalisée par un accouplement à limitation de couple (12) chargé par ressort et disposé au niveau d'un côté du carter de transmission (21, 22), le ressort (13) étant disposé de l'autre côté du carter (21, 22).

9. Rétroviseur escamotable selon la revendication 8, **caractérisé en ce qu'**entre les deux organes menés (22, 23) est prévu un palier axial (34).
